# EUROPEAN PATENT SPECIFICATION

(11) **EP 1 811 359 B1**
(45) Date of publication and mention of the grant of the patent: **09.09.2009**
(21) Application number: 06250315.6
(22) Date of filing: 20.01.2006
(51) Int. Cl.: G06F 3/023

(54) **Hand-held electronic device with automatic text correction**
Tragbare elektronische Vorrichtung mit automatischer Textkorrektur
Dispositif électronique portable avec correction automatique de texte

(43) Date of publication of application: 25.07.2007
(73) Proprietor: Research In Motion Limited, Waterloo, Ontario N2L 3W8 (CA)
(72) Inventor: Bumiller, George Baldwin, Ramsey, New Jersey 07446 (US)
(74) Representative: Fennell, Gareth Charles

(56) References cited:
- EP-A- 1 217 504
- US-A- 5 761 689
- US-B1- 6 396 482

## Description

### BACKGROUND

### Field

The disclosure relates generally to handheld electronic devices and, more particularly, to a handheld electronic device having an automatic text generation function and to an associated method.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration. Many handheld electronic devices include a full keyboard (e.g., a full QWERTY keyboard). With advances in technology, however, a trend towards reduced keyboards is emerging, in which keys and other input structures often perform multiple functions or may otherwise have multiple aspects or features assigned thereto. As a practical matter, the keys of a keypad (whether reduced or not reduced) can only be minimized to a certain extent before the keys become relatively unusable. In order to enable text entry, however, a keypad must be capable of entering all twenty-six letters of the Latin alphabet, for instance, as well as appropriate punctuation and other symbols.

To improve text entry, a handheld electronic device may incorporate an auto-text function in which certain text that is entered using the keypad is automatically replaced with programmed text. More specifically, commonly misspelled words may be replaced with a correctly spelled word. When, for example, the characters "h", "t", and "e" followed by a delimiter (e.g., the actuation of the <space> key) are entered, the auto-text function replaces the text "hte" with the text "the" on a display. Additionally, common abbreviations may be replaced with the full word. When the characters "c", "m", and "d" followed by a delimiter (e.g., the actuation of the <space> key) are entered, for example, the auto-text function replaces the text "cmd" with the text "command" on the display.

Additionally, the auto-text function may be programmed to replace certain text that is entered using the keypad with programmed text that contains an apostrophe (or other punctuation, symbols, etc.). For example, when the characters "d", "o", "n", and "t" followed by a delimiter (e.g., the actuation of the <space> key) are entered, the auto-text function replaces the text "dont" with the programmed text "don't". As another example, when the characters "h", "e", and "1" followed by a delimiter (e.g., the actuation of the <space> key) are entered, the auto-text function replaces the text "hel" with the programmed text "he'll".

Although generally helpful, the auto-text function may, in some instances, hinder a user from efficiently entering text. For example, a user may desire to enter the abbreviation for the word "identification". However, when the characters "I" and "D" followed by a delimiter (e.g., the actuation of the <space> key) are entered; the auto-text function replaces the text "ID" with the programmed text "I'd". Accordingly, most auto-text functions include an override capability. By activating the override capability, the word "I'd" may be changed back to the abbreviation "ID". Activating the override capability, however, generally requires additional keystrokes or other input, thus negatively impacting a user's text entry efficiency.

US-A-5761689 discloses a method and word processing system for automatically replacing one or more characters of text entered by a user in a word processing document with the corresponding plain text, formatted text, or other object.

It would be desirable to provide an improved handheld electronic device which is desirably configured with enough features to enable text entry and other tasks with relative ease. More specifically, it would be desirable for such an improved handheld electronic device to have improved auto-text functions.

The invention is set out in the claims.

A full understanding can be gained from the following Description of the Preferred Embodiment when read in conjunction with the accompanying drawings in which:
Fig. 1 is a top plan view of an improved handheld electronic device.
Fig. 2 is a schematic depiction of the handheld electronic device of Fig. 1.
Fig. 3 is an exemplary flowchart depicting certain aspects of an auto-text function that can be executed on the handheld electronic device of Fig. 1.
Fig. 4 is an exemplary flowchart depicting certain aspects of the auto-text function shown in Fig. 3 that can be executed on the handheld electronic device.

Similar numerals refer to similar parts throughout the specification.

### DESCRIPTION OF THE PREFERRED EMBODIMENT

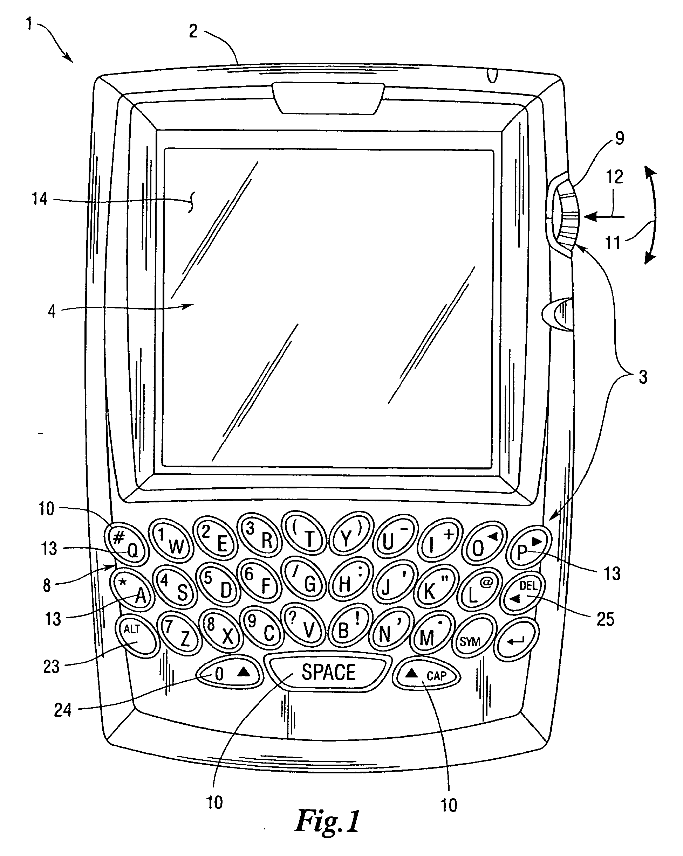

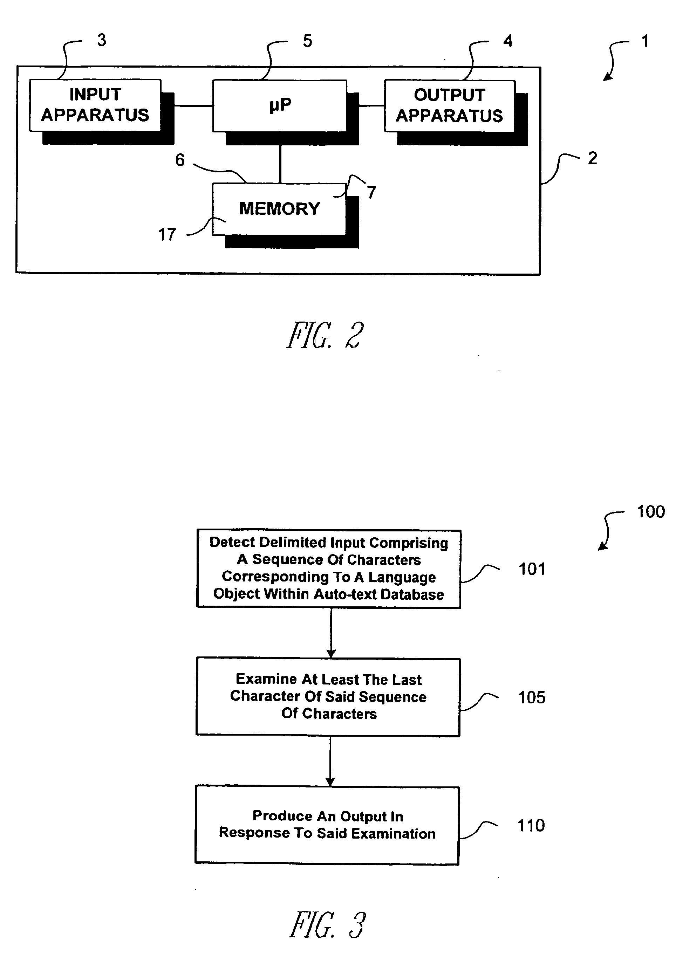

An improved handheld electronic device 1 is indicated generally in Fig. 1 and is depicted schematically in Fig. 2. The exemplary handheld electronic device 1 includes a housing 2 upon which are disposed a processor unit that includes an input apparatus 3, an output apparatus 4, a processor 5, and a memory 6 for storing at least a first routine 7 and an auto-text database 17. The processor 5 may be, for instance, and without limitation, a microprocessor (µP) and is responsive to inputs from the input apparatus 3 and provides output signals to the output apparatus 4. The output apparatus 4 includes a display 14 upon which can be provided an output (not shown in Figs. 1 or 2). The processor 5 also interfaces with the memory 6 and is capable of executing the at least first routine 7 and accessing the auto-text database 17.

As can be understood from Fig. 1, the input apparatus 3 includes a keypad 8 and a thumbwheel 9. As will be described in greater detail below, the keypad 8 is in the exemplary form of a full QWERTY keyboard including a plurality of keys 10 that serve as input members. It is noted, however, that the keypad 8 may be of other configurations, such as an AZERTY keyboard, a QWERTZ keyboard, or other keyboard arrangement.

As employed herein, the expression "linguistic element" and variations thereof shall refer broadly to any element that itself can be a language object or from which a language object can be constructed, identified, or otherwise obtained, and thus would include, for example and without limitation, characters, letters, strokes, ideograms, phonemes, morphemes, digits, and the like.

As employed herein, the expression "language object" and variations thereof shall refer broadly to any type of object that may be constructed, identified, or otherwise obtained from one or more linguistic elements, that can be used alone or in combination to generate text, and that would include, for example and without limitation, words, shortcuts, symbols, ideograms, and the like.

The keys 10 are disposed on a front face of the housing 2, and the thumbwheel 9 is disposed at a side of the housing 2. The thumbwheel 9 can serve as another input member and is both rotatable, as is indicated by the arrow 11, to provide inputs to the processor 5, and also can be pressed in a direction generally toward the housing 2, as is indicated by the arrow 12, to provide other input to the processor 5.

As can further be seen in Fig. 1, many of the keys 10 include a number of linguistic elements 13 disposed thereon. As employed herein, the expression "a number of" and variations thereof shall refer broadly to any non-zero quantity, including a quantity of one.

One of the keys 10 of the keypad 8 includes as the linguistic element 13 thereof the letter "Q". An adjacent key 10 includes as the linguistic element 13 thereof the letter "W". The next adjacent key 10 of the keypad 8 includes as the linguistic element 13 thereof the letter "E", and the next adjacent key 10 includes as the linguistic element 13 thereof the letter "R". It can be seen that the arrangement of the linguistic elements 13 on the keys 10 of the keypad 8 is generally of a QWERTY arrangement, albeit with many of the keys 10 also including other linguistic elements 13. As seen in Fig. 1, the key 10 having the letter "Q" also includes the linguistic element "#" thereon. The "#" symbol is generated on the display 14, for example, by actuating and holding "alt" key 23 in conjunction with actuating the "Q" key. Among the keys 10 of the keypad 8 additionally is a backspace key 25 that, as will be described in greater detail below, can be used to activate an auto-text override function.

The memory 6 can be any of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. The memory 6 includes a number of routines depicted generally with the numeral 7 for the processing of data. The routines 7 can be in any of a variety of forms such as, without limitation, software, firmware, and the like. As will be explained in greater detail below, the routines 7 include an auto-text function as an application, as well as other routines.

The auto-text database 17 includes a number of language objects 21 stored therein. The contents of the auto-text database 17 may be established by, for example, the manufacturer and/or a user. Table 1 illustrates (without limitation) an exemplary listing of the language objects 21 and their corresponding sequence of characters stored within auto-text database 17. Each language object 21 corresponds to one or more sequence of characters. For example, the sequence of characters "c", "a", "n", and "t" corresponds to the language object 21 "can't" in the auto-text database 17. Accordingly, if the keys <c>, <a>, <n>, and <t> are actuated in sequence followed by entry of a delimiter (e.g., actuation of the <space> key), the language object 21 "can't" is provided by the auto-text function to the processor 5 and output on display 14.

As illustrated in Table 1, the language object 21 "can't" corresponds to only one sequence of characters in the auto-text database. As a result, the language object "can't" will be output to the display 14 anytime the sequence of characters "c", "a", "n", and "t" are entered followed by a delimiter, regardless of the case (i.e., upper or lower) of any of the characters in that sequence.

**Table 1: Auto-text Database Contents**

| Sequence of Characters | Language Object | | Sequence of Characters | Language Object |
|---|---|---|---|---|
| | | | | |
| arent | aren't | | id | I'd |
| cant | can't | | Id | I'd |
| cmd | command | | iD | ID |
| couldnt | couldn't | | ID | ID |
| didnt | didn't | | il | I'll |
| doesnt | doesn't | | im | I'm |
| dont | don't | | Im | I'm |
| hadnt | hadn't | | iM | IM |
| hasnt | hasn't | | IM | IM |
| havent | haven't | | isnt | isn't |
| hel | he' ll | | itll | it'll |
| hes | he's | | itsa | it's a |
| heres | here's | | ive | I've |
| i | I | | sn | SN |

However, the correspondence between some language objects 21 and a sequence of characters may be case sensitive. For example in Table 1, the language objects 21 "I'd" and "ID" each correspond to the same sequence of characters, but the correspondence is case sensitive. More particularly, if the <i> and <d> keys on the handheld device are actuated in sequence followed by entry of a delimiter (e.g., actuation of the <space> key), the language object 21 "I'd" is displayed if both the "i" and the "d" characters are entered in lower case and/or the "i" character is entered in upper case and the "d" character is entered in lower case. In contrast, the language object "ID" is displayed if both the "i" and the "d" characters are entered in upper case and/or the "i" character is entered in lower case and the "d" character is entered in upper case. A similar result is obtained for the sequence of characters "i" and "m". More specifically, depending on the case of the characters "i" and "m", the language object 21 displayed may be "I'm" or "IM" (e.g., the abbreviation for "Instant Messaging"). In the current embodiment, the user is able to input an upper case character by, for example, actuating the <shift> key (either simultaneously with or prior to) the key associated with the desired character or by actuating and holding the key associated with the desired character for a predetermined period of time.

As discussed above, prior auto-text functions, in some instances, hinder a user from efficiently entering text. Fig. 3 is a flowchart illustrating operational process 100 for an improved auto-text function. Operational process 100 begins at operation 101 where a delimited input corresponding to a language object 21 within the auto-text database 17 is detected. For example, a user may enter the sequence of characters "c", "a", "n", and "t" followed by a delimiter, such as actuation of the <space> key. Although the <space> key is used to enter the delimiter in the instant example, it should be apparent that other delimiters may be used.

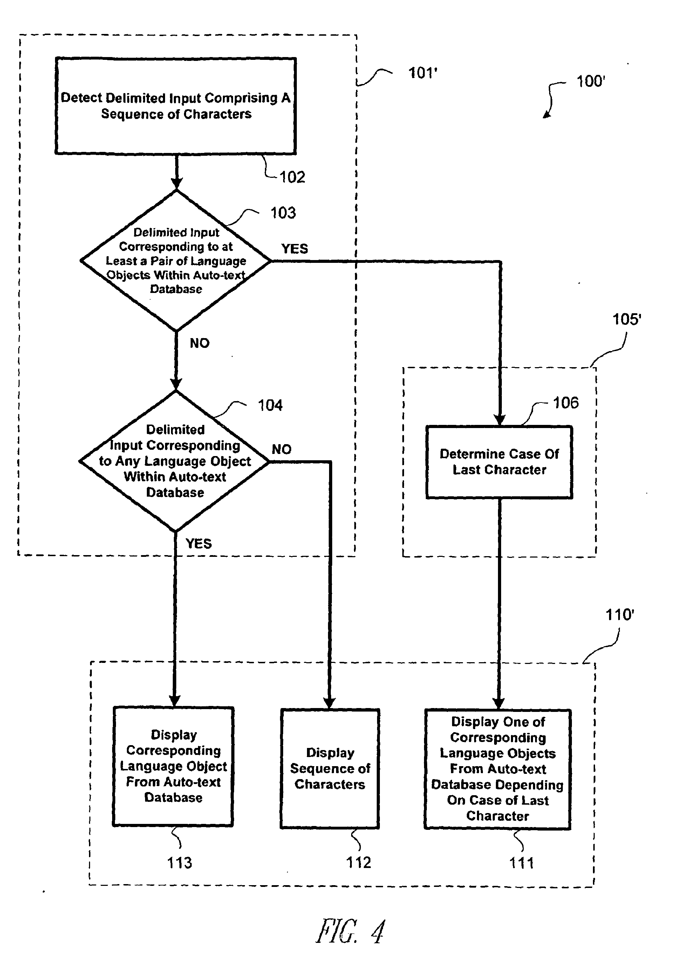

After the delimited input is detected in operation 101, at least the last character of the sequence of characters of the delimited input is examined in operation 105. For example in the embodiment that will be discussed in conjunction with Fig. 4, the last character of the sequence of characters of the delimited input is examined, whereas in the embodiment that will be discussed in conjunction with Fig. 5, the last character of the sequence of characters and the next-to-last character in the sequence of characters of the delimited input are examined. It should be apparent, however, that any desired number of characters in the sequence of characters may be examined. It should also be apparent that the particular location of the character(s) within the sequence of characters that is (are) being examined may vary. In response to operation 105, an output is produced in operation 110.

Fig. 4 is an exemplary flowchart depicting certain aspects of operational process 100 for the improved auto-text function as shown in Fig. 3. More specifically, Fig. 4 illustrates operational process 100' which depicts certain aspects of the improved auto-text function. Operational process 100' begins with operation 101', which includes operation 102, operation 103, and operation 104. Operational control begins when operation 102 detects a delimited input comprising a sequence of characters. After the delimited input is detected at operation 102, a determination is made at operation 103 as to whether the sequence of characters of the delimited input corresponds to at least a pair of language objects 21 within the auto-text database 17. If the sequence of characters (regardless of their case) corresponds to at least a pair of language objects 21, control branches "YES" and passes to operation 105' which includes operation 106. Operation 106 determines the case (e.g., upper-case or lower case) of at least one character of the sequence of characters of the delimited input; here, the case of the last character of the sequence of characters. Operational control then passes to operation 110' which includes operations 111-113. In the current embodiment, operational control passes from operation 106 to operation 111 which outputs to the display 14 one of the at least pair of language objects 21 corresponding to the sequence of characters detected in operation 102. More specifically, in the current embodiment, operation 111 displays the language object 21 (of the at least pair of language objects 21) corresponding to the identified case of the last character of the sequence of characters of the delimited input (i.e., as determined in operation 106).

Returning to operation 103, if the sequence of characters is not associated with at least a pair of language objects 21 within an auto-text database 17, control branches "NO" and passes to operation 104. A determination is made at operation 104 as to whether the delimited input (regardless of the case of the sequence of characters) corresponds to any language object 21 within the auto-text database 17. If so, control branches "YES" and passes to operation 113 which outputs the corresponding language object 21 to the display 14. If the auto-text database 17 does not include any language objects 21 that correspond to the delimited input, operational control branches "NO" and passes from operation 104 to operation 112. In operation 112, the sequence of characters, as entered by the user, is output to the display 14.

In one example of the functioning of operational process 100', a user attempting to input the abbreviation "ID" (i.e., short for the word "identification") on the handheld device 1 inputs the characters "i" and "d", and a delimiter (e.g., actuates the <space> key). More specifically, the user enters one of the following keystroke sequences: <i-d><space>;<I-d><space>;<i-D><space>;or<I-D>< space >. This delimited input is detected at operation 102 and a determination is made at operation 103 as to whether this delimited input corresponds to at least a pair of language objects 21 within the auto-text database 17.

Here, the sequence of characters "i" and "d" does correspond to at least a pair of language objects 21 within the auto-text database 17 (e.g., "I'd" and "ID"). Accordingly, processing proceeds to operation 106 where the case (e.g., upper or lower case) of the last character of the sequence of characters is determined. For example, if the last character of the sequence of characters is in upper-case (i.e., if the user entered either < i - D > < space > or < I - D > < space >), the corresponding language object "ID" is provided as an output to display 14 in operation 111. If, however, the last character of the sequence of characters is in lower-case (i.e., if the user entered either < i - d > < space > or < I - d > < space >), the corresponding language object "I'd" is provided as an output to display 14 in operation 111.

In another example of the functioning of operational process 100', a user inputs the characters "i" and "I", and a delimiter (e.g., actuates the <space> key). More specifically, the user enters one of the following keystroke sequences: < i -1 > < space >; < I - I > < space >; < i - L > < space >; or < I - L > < space >. This delimited input is detected at operation 102 and a determination is made at operation 103 as to whether this delimited input corresponds to at least a pair of language objects 21 within the auto-text database 17.

Here, the delimited input does not correspond to at least a pair of language objects 21 within the auto-text database 17. As a result operational control is passed to operation 104 where a determination is made as to whether the delimited input corresponds to a single language object 21 within the auto-text database 17. In the instant example, the delimited input does correspond to a single language object 21 within the auto-text database 17 (i.e., language object 21 "I'll"). Accordingly, that language object 21 (i.e., "I'll") is provided as an output to display 14 in operation 113.

In yet another example of the functioning of operational process 100', a user inputs the characters "i" and "t", and a delimiter (e.g., actuates the <space> key). More specifically, the user enters one of the following keystroke sequences: < i - t > < space >; < I - t > < space >; < i - T > < space >; or < I - T > < space >. This delimited input is detected at operation 102 and a determination is made at operation 103 as to whether this delimited input corresponds to at least a pair of language objects 21 within the auto-text database 17.

Here, the delimited input does not correspond to at least a pair of language objects 21 within the auto-text database 17. As a result operational control is passed to operation 104 where a determination is made as to whether the delimited input corresponds to a single language object 21 within the auto-text database 17. In the instant example, the delimited input does not correspond to a single language object within the auto-text database 17. Accordingly, operational control is passed to operation 112 and the sequence of characters, as typed by the user, is provided as the output on display 14. More specifically, when the user inputs the keystroke sequence < I - t > < space >, the text "It" is output to display 14.

Although not shown in Fig. 4, operational process 100' may be subject to an auto-text override function. The auto-text override may be activated, for example and without limitation, by actuating the <back space> key. For instance, the language object "ID" corresponds to the keystroke sequence < i - D > < space > in the auto-text database 17 (as discussed above). Thus, the language object "ID" is output on display 14 in response to detection of the delimited key sequence < i - D > < space >. The key sequence <i - D > < space > < back space > < space>, however, activates the override function and cause the characters "iD" to be output on display 14.

## Claims

1. A method of generating text on a handheld electronic device (1) having an input apparatus (3); an output apparatus (4); a memory (6) having a number of language objects and a routine stored therein; and a processor (5) executing instructions of the routine, receiving input from the input apparatus, and operating the output apparatus; the method comprising:
detecting a delimited input comprising a sequence of characters (102);
determining whether said input has a sequence of characters corresponding to at least a pair of language objects (103);
responsive to a determination that said input has a sequence of characters corresponding to at least a pair of language objects, determining the case of at least the last character of said sequence of characters (106); and
responsive to said determining the case, providing (111) one of said at least a pair of language objects as an output.

2. The method of Claim 1 further comprising:
detecting (102) as the delimited input an input having a sequence of characters, wherein at least two of said characters thereof comprise a special entry of characters that typically do not occur adjacent to each other within a word in a particular language selected for use by the handheld device;
substituting a language object for said at least two of said characters of said sequence of characters; and
providing (110) as said output said sequence of characters with second said language object substituted for said at least two of said characters of said sequence of characters.

3. The method of Claim 2, further comprising determining that said at least two of said characters thereof comprise a special entry of characters that typically do not occur adjacent to each other with a word in a particular language selected for use by the handheld device.

4. The method of Claim 3, wherein said determining comprises comparing said at least two of said characters of said sequence of characters to entries within an auto-text database (17).

5. The method of claim 1, further comprising:
detecting as the delimited input an input comprising a sequence of characters associated with a first language object and a second language object within a database;
examining a last character of said sequence of characters;
providing as the output the first language object when said last character of said sequence of characters is input in a first case; and
providing as the output the second language object when said last character of said sequence of characters is input in a second case.

6. A handheld electronic device (1) comprising:
a processor unit including a processor (5) executing instructions of the routine, receiving input from the input apparatus and operating the output apparatus, an input apparatus(3), an output apparatus (4), and a memory (6) having a routine stored therein and having a number of language objects stored therein, the routine being adapted to:
detect a delimited input comprising a sequence of characters (102);
determine whether said input has a sequence of characters corresponding to at least a pair of language objects (103);
responsive to a determination that said input has a sequence of characters corresponding to at least a pair of language objects determine the case of at least the last character of said sequence of characters (106); and
responsive to said determining the case, provide (111) one of said at least a pair of language objects as an output.

7. The handheld electronic device (1) of Claim 6 wherein said routine is further adapted to:
detect (102) as the delimited input an input having a sequence of characters, wherein at least two of said characters thereof comprise a special entry of characters that typically do not occur adjacent to each other within a word in a particular language selected for use by the handheld electronic device;
substitute a second language object for said at least two of said characters of said sequence of characters; and
provide (110) as said output said sequence of characters with said language object substituted for said at least two of said characters of said sequence of characters.

8. The handheld electronic device (1) of Claim 7 wherein said routine is further adapted to determine that said at least two of said characters thereof comprise a special entry of characters that typically do not occur adjacent to each other within a word in a particular language selected for use by the handheld device.

9. The handheld electronic device (1) of Claim 7 wherein said routine is further adapted to compare said at least two of said characters of said sequence of characters to entries within an auto-text database.

## Patentansprüche

1. Verfahren zum Erzeugen von Text auf einer handgehaltenen bzw. tragbaren elektronischen Vorrichtung (1) mit einer Eingabevorrichtung (3); einer Ausgabevorrichtung (4); einem Speicher (6) mit einer Anzahl von Sprachobjekten und einer darin gespeicherten Routine; und einem Prozessor (5), der Anweisungen der Routine ausführt, eine Eingabe von der Eingabevorrichtung empfängt und die Ausgabevorrichtung betreibt; wobei das Verfahren aufweist:
Erfassen einer begrenzten Eingabe, die eine Sequenz von Buchstaben bzw. Zeichen aufweist (102);
Bestimmen, ob die Eingabe eine Sequenz von Buchstaben hat, die zumindest einem Paar von Sprachobjekten entspricht (103);
als Reaktion auf eine Bestimmung, dass die Eingabe eine Sequenz von Buchstaben hat, die zumindest einem Paar von Sprachobjekten entspricht, Bestimmen der Groß- oder Kleinschreibung von zumindest dem letzten Buchstaben der Sequenz von Buchstaben (106); und
als Reaktion auf die Bestimmung der Groß- oder Kleinschreibung, Vorsehen (111) eines des zumindest einen Paares von Sprachobjekten als eine Ausgabe.

2. Verfahren gemäß Anspruch 1, das weiter aufweist:
Erfassen (102) als die begrenzte Eingabe eine Eingabe mit einer Sequenz von Buchstaben, wobei zumindest zwei dieser Buchstaben einen besonderen Eintrag von Buchstaben aufweisen, die typischerweise nicht aneinander angrenzend in einem Wort in einer bestimmten Sprache auftreten, die zur Verwendung durch die tragbare Vorrichtung gewählt wird;
Substituieren eines Sprachobjekts für die zumindest zwei der Buchstaben der Sequenz von Buchstaben; und
Vorsehen (110) als die Ausgabe die Sequenz von Buchstaben mit dem zweiten Sprachobjekt substituiert für die zumindest zwei der Buchstaben der Sequenz von Buchstaben.

3. Verfahren gemäß Anspruch 2, das weiter aufweist Bestimmen, dass die zumindest zwei dieser Buchstaben einen besonderen Eintrag von Buchstaben aufweisen, die typischerweise nicht aneinander angrenzend in einem Wort in einer bestimmten Sprache auftreten, die zur Verwendung durch die tragbare Vorrichtung gewählt wird.

4. Verfahren gemäß Anspruch 3, wobei das Bestimmen aufweist ein Vergleichen der zumindest zwei der Buchstaben der Sequenz von Buchstaben mit Einträgen in einer Autotext-Datenbank (17).

5. Verfahren gemäß Anspruch 1, das weiter aufweist:
Erfassen, als die begrenzte Eingabe, einer Eingabe, die eine Sequenz von Buchstaben aufweist, die zu einem ersten Sprachobjekt und einem zweiten Sprachobjekt in einer Datenbank gehört;
Untersuchen eines letzten Buchstabens der Sequenz von Buchstaben;
Vorsehen des ersten Sprachobjekts als die Ausgabe, wenn der letzte Buchstabe der Sequenz von Buchstaben in einer ersten Groß- oder Kleinschreibung eingegeben ist; und
Vorsehen des zweiten Sprachobjekts als die Ausgabe, wenn der letzte Buchstabe der Sequenz von Buchstaben in einer zweiten Groß- oder Kleinschreibung eingegeben ist.

6. Tragbare elektronische Vorrichtung (1), die aufweist:
eine Prozessoreinheit, die einen Prozessor (5) umfasst, der Anweisungen der Routine ausführt, eine Eingabe von der Eingabevorrichtung empfängt und die Ausgabevorrichtung betreibt, eine Eingabevorrichtung (3), eine Ausgabevorrichtung (4) und einen Speicher (6) mit einer darin gespeicherten Routine und einer Anzahl von darin gespeicherten Sprachobjekten, wobei die Routine ausgebildet ist:
eine begrenzte Eingabe zu erfassen, die eine Sequenz von Buchstaben bzw. Zeichen aufweist (102);
zu bestimmen, ob die Eingabe eine Sequenz von Buchstaben hat, die zumindest einem Paar von Sprachobjekten entspricht (103);
als Reaktion auf eine Bestimmung, dass die Eingabe eine Sequenz von Buchstaben hat, die zumindest einem Paar von Sprachobjekten entspricht, die Groß- oder Kleinschreibung von zumindest dem letzten Buchstaben der Sequenz von Buchstaben zu bestimmen (106); und
als Reaktion auf die Bestimmung der Groß- oder Kleinschreibung, eines des zumindest einen Paares von Sprachobjekten als eine Ausgabe vorzusehen (111).

7. Tragbare elektronische Vorrichtung (1) gemäß Anspruch 6, wobei die Routine weiter ausgebildet ist:
als die begrenzte Eingabe eine Eingabe mit einer Sequenz von Buchstaben zu erfassen (102), wobei zumindest zwei dieser Buchstaben einen besonderen Eintrag von Buchstaben aufweisen, die typischerweise nicht aneinander angrenzend in einem Wort in einer bestimmten Sprache auftreten, die zur Verwendung durch die tragbare Vorrichtung gewählt wird;
ein zweites Sprachobjekt für die zumindest zwei der Buchstaben der Sequenz von Buchstaben zu substituieren; und
als die Ausgabe die Sequenz von Buchstaben mit dem Sprachobjekt substituiert für die zumindest zwei der Buchstaben der Sequenz von Buchstaben vorzusehen (110).

8. Tragbare elektronische Vorrichtung (1) gemäß Anspruch 7, wobei die Routine weiter ausgebildet ist, zu bestimmen, dass die zumindest zwei dieser Buchstaben einen besonderen Eintrag von Buchstaben aufweisen, die typischerweise nicht aneinander angrenzend in einem Wort in einer bestimmten Sprache auftreten, die zur Verwendung durch die tragbare Vorrichtung gewählt wird.

9. Tragbare elektronische Vorrichtung (1) gemäß Anspruch 7, wobei die Routine weiter ausgebildet ist, die zumindest zwei der Buchstaben der Sequenz von Buchstaben mit Einträgen in einer Autotext-Datenbank zu vergleichen.

## Revendications

1. Procédé de génération de texte sur un dispositif électronique (1) tenu à la main comportant un appareil (3) d'entrée ; un appareil (4) de sortie ; une mémoire (6) dans laquelle sont mémorisés un certain nombre d'objets de langage et un sous-programme ; et un processeur (5) exécutant des instructions du sous-programme, recevant une entrée provenant de l'appareil d'entrée, et mettant en oeuvre l'appareil de sortie ; le procédé comprenant :
la détection (102) d'une entrée délimitée comprenant une séquence de caractères ;
la détermination (103) de ce que ladite entrée comporte, ou non, une séquence de caractères correspondant à au moins une paire d'objets de langage ;
en réponse à la détermination de ce que ladite entrée comporte une séquence de caractères correspondant à au moins une paire d'objets de langage, la détermination (106) de la casse d'au moins le dernier caractère de ladite séquence de caractères ; et
en réponse à ladite détermination de la casse, la fourniture (111), comme sortie, de l'une de ladite au moins une paire d'objets de langage.

2. Procédé selon la revendication 1, comprenant en outre :
la détection (102), en tant qu'entrée délimitée, d'une entrée ayant une séquence de caractères, dans laquelle au moins deux desdits caractères de celle-ci constituent un point d'entrée spécial de caractères qui typiquement n'apparaissent pas l'un à côté de l'autre dans un mot d'un langage particulier choisi pour utilisation par le dispositif tenu à la main ;
la substitution d'un objet de langage auxdits au moins deux desdits caractères de ladite séquence de caractères ; et
la fourniture (110), en tant que ladite sortie, de ladite séquence de caractères avec ledit un second objet de langage substitué auxdits au moins deux desdits caractères de ladite séquence de caractères.

3. Procédé selon la revendication 2, comprenant en outre la détermination que lesdits au moins deux desdits caractères de celle-ci constituent un point d'entrée spécial de caractères qui typiquement n'apparaissent pas l'un à côté de l'autre avec un mot d'un langage particulier choisi pour utilisation par le dispositif tenu à la main.

4. Procédé selon la revendication 3, dans lequel ladite détermination comprend la comparaison desdits au moins deux desdits caractères de ladite séquence de caractères à des points d'entrée dans une base de données (17) pour insertion automatique de texte.

5. Procédé selon la revendication 1, comprenant en outre :
la détection, en tant qu'entrée délimitée, d'une entrée comprenant une séquence de caractères associée à un premier objet de langage et à un second objet de langage à l'intérieur d'une base de données ;
l'examen du dernier caractère de ladite séquence de caractères ;
la fourniture, en tant que sortie, du premier objet de langage lorsque ledit dernier caractère de ladite séquence de caractères est entré dans une première casse ; et
la fourniture, en tant que sortie, du second objet de langage lorsque ledit dernier caractère de ladite séquence de caractères est entré dans une seconde casse.

6. Dispositif électronique (1) tenu à la main comprenant :
une unité de traitement incluant un processeur (5) exécutant des instructions du sous-programme, recevant une entrée provenant de l'appareil d'entrée, et mettant en oeuvre l'appareil de sortie, un appareil (3) d'entrée, un appareil (4) de sortie et une mémoire (6) dans laquelle sont mémorisés un sous-programme et un certain nombre d'objets de langage, le sous-programme étant apte :
à détecter (102) une entrée délimitée comprenant une séquence de caractères ;
à déterminer (103) si ladite entrée comporte une séquence de caractères correspondant à au moins une paire d'objets de langage ;
en réponse à la détermination de ce que ladite entrée comporte une séquence de caractères correspondant à au moins une paire d'objets de langage, à déterminer (106) la casse d'au moins le dernier caractère de ladite séquence de caractères ; et
en réponse à ladite détermination de la casse, à fournir (111), comme sortie, l'une de ladite au moins une paire d'objets de langage.

7. Dispositif électronique (1) tenu à la main selon la revendication 6, dans lequel ledit sous-programme est en outre apte :
à détecter (102), en tant qu'entrée délimitée, une entrée ayant une séquence de caractères, dans laquelle au moins deux desdits caractères de celle-ci constituent un point d'entrée spécial de caractères qui typiquement n'apparaissent pas l'un à côté de l'autre dans un mot d'un langage particulier choisi pour utilisation par le dispositif tenu à la main ;
à substituer un second objet de langage auxdits au moins deux desdits caractères de ladite séquence de caractères ; et
à fournir (110), en tant que ladite sortie, ladite séquence de caractères avec ledit objet de langage substitué auxdits au moins deux desdits caractères de ladite séquence de caractères.

8. Dispositif électronique (1) tenu à la main selon la revendication 7, dans lequel ledit sous-programme est en outre apte à déterminer que lesdits au moins deux desdits caractères de celle-ci constituent un point d'entrée spécial de caractères qui typiquement n'apparaissent pas l'un à côté de l'autre dans un mot d'un langage particulier choisi pour utilisation par le dispositif tenu à la main.

9. Dispositif électronique (1) tenu à la main selon la revendication 7, dans lequel ledit sous-programme est en outre apte à comparer lesdits au moins deux desdits caractères de ladite séquence de caractères à des points d'entrée dans une base de données pour insertion automatique de texte.
